(19) Europäisches Patentamt / European Patent Office / Office européen des brevets

(11) **EP 2 832 976 A1**

(12) # EUROPEAN PATENT APPLICATION

(43) Date of publication:
**04.02.2015 Bulletin 2015/06**

(51) Int Cl.:
*F02C 9/28* $^{(2006.01)}$    *F01D 15/10* $^{(2006.01)}$
*H02P 9/04* $^{(2006.01)}$

(21) Application number: **14178891.9**

(22) Date of filing: **29.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.07.2013 US 201313955933**

(71) Applicant: **General Electric Company**
**Schenectady, New York 12345 (US)**

(72) Inventors:
• **Huey, John Rogers**
**Greenville, SC 29615 (US)**

• **Ho, Chi Ming**
**Greenville, SC 29615 (US)**
• **Jordan, Harold Lamar**
**Greenville, SC 29615 (US)**

(74) Representative: **Illingworth-Law, William Illingworth et al**
**Global Patent Operation - Europe**
**GE International Inc.**
**The Ark**
**201 Talgarth Road**
**Hammersmith**
**London W6 8BJ (GB)**

(54) **Gas turbine system control adjustment for gas turbine shaft speed change**

(57)    A power system 100 includes a gas turbine 110 configured to rotate a shaft 114 to supply power to an electricity grid 120 and a controller 116 configured to detect a change in a speed of the shaft 114 and to adjust a formula for controlling a fuel supplied to a combustor 112 of the gas turbine 110 based on detecting a changing shaft speed.

## FIG. 1

EP 2 832 976 A1

**Description**

The subject matter disclosed herein relates to controlling a gas turbine and in particular to controlling a gas turbine connected to an electrical grid to compensate for changes to shaft rotation speed.

Several countries enforce grid frequency control requirements on gas turbine operators that specify a percentage of standard base load output that must be maintained as grid frequency drops. One way to meet such a requirement is to directly control fuel by comparing the sensed gas turbine load with the minimum required value. However, according to a power output formula that calculates the power output from the gas turbine based on rotation speed and acceleration of a gas turbine shaft, the power output from the gas turbine increases temporarily when the shaft speed decreases due to the increased load on the electrical system. The temporary increase in calculated power causes a gas turbine controller to maintain or decrease fuel supplied to the gas turbine temporarily, delaying a return to the minimum required load when the power level of the grid and the rotation speed of the gas turbine shaft even out.

A gas turbine's control system is designed to know the percentage of a base load required output, which is typically defined by the country requirement as a function of grid frequency. The control system adjusts fuel to the gas turbine to maintain output at the required load as grid frequency drifts bellow standard values, typically 50 Hz or 60 Hz.

The gas turbine load is a combination of power supplied by the gas turbine's combustion (i.e. torque times shaft speed) system and the change in the gas turbine's stored kinetic energy, which is based in part on shaft speed and shaft acceleration. However, based on this understanding, when the shaft decelerates, the gas turbine control system's attempts to maintain a gas turbine load can be hampered, since the control system detects an initial increase in power, which delays the control system's response to the decrease in shaft speed.

According to one aspect of the invention a power system includes a gas turbine configured to rotate a shaft to supply power to an electricity grid and a controller configured to detect a change in a speed of the shaft and to adjust a formula for controlling a fuel supplied to a combustor of the gas turbine based on detecting a changing shaft speed.

According to another aspect of the invention a method of controlling a gas turbine connected to an electrical grid includes detecting a change in speed of a shaft of the gas turbine and adjusting a formula for controlling fuel supplied to a combustor of the gas turbine based on detecting a changing shaft speed. The method also includes controlling the fuel supplied to the combustor based on adjusting the formula for controlling the fuel.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 illustrates a power system according to an embodiment of the invention;

FIG. 2 illustrates a graph of a gas turbine operation according to an embodiment of the invention; and

FIG. 3 is a flowchart illustrating a method according to an embodiment of the invention.

The detailed description explains embodiments of the invention, together with advantages and features, by way of example with reference to the drawings.

Gas turbines connected to an electrical grid may be required to maintain the gas turbine load at a predetermined level. However, changes in the shaft speed, such as changes imposed upon the shaft by the electrical grid, impede the ability of a gas turbine control system to maintain the gas turbine at the predetermined load. Embodiments of the invention relate to adjusting a calculation of the gas turbine power for purposes of supplying fuel to the gas turbine.

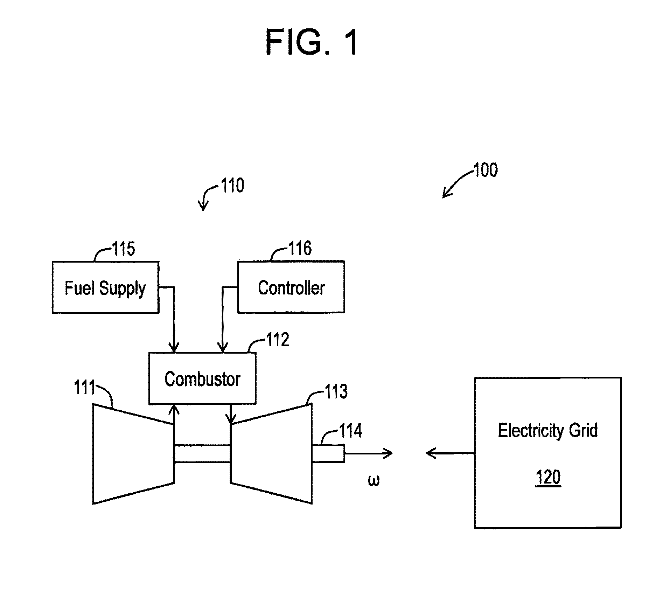

FIG. 1 illustrates a power system 100 according to an embodiment of the invention. The system 100 includes a gas turbine system 110, including a compressor 111, combustor 112, turbine stage 113 and shaft 114. During operation, air is supplied to the compressor 111 and from the compressor to the combustor 112. Fuel is supplied to the combustor 112 from the fuel supply 115, and the controller 116 controls the flow of fuel and the operation of the combustor 112. The combustor 112 combusts the fuel with the air from the compressor 111, and the combustion product (or burned gas) is passed over the turbine 113 to rotate the shaft 114.

When the gas turbine system 110 is connected to the electricity grid 120, the rotational speed $\omega$ of the shaft 114 corresponds to the frequency of the electricity grid 120. The electricity grid 120 is made up of power sources, including gas turbines and other power generation structures, as well as power consumption structures, including homes and commercial facilities. When power drops on the electricity grid 120, the electricity grid 120 causes the shaft 114 to decrease in rotation speed $\omega$, even when the fuel input from the fuel supply 115 to the combustor 112 has not changed.

The change in power output of the gas turbine 110 due to a changing rotational speed can be estimated by the formula:

$$\text{Change in Power Output} = -I\omega\alpha \qquad\qquad (1)$$

where $\omega$ is a rotation speed of the shaft 114, $I$ is a moment of inertia of the shaft 114, and $\alpha$ is the shaft 114 acceleration.

During operation of the gas turbine system 110, the gas turbine system 110 operates at a base load temperature that corresponds to a certain gas turbine output when the shaft speed is at its nominal value (typically 50/60 Hz). If the frequency of the electricity grid 120 drops, then the steady-state power output from the gas turbine system 110 also drops over time if the fuel flow is maintained, or if the fuel flow is reduced to keep temperatures below the base load temperature. However, the gas turbine system 110 may need to be run above the base load temperature. For example, regulations may require the gas turbine system 110 to maintain gas turbine output at a level requiring an overall increase in fuel and/or temperature.

Based on the change in power output equation (1), when the shaft 114 decelerates, and the shaft 114 acceleration $\alpha$ is negative, the gas turbine power output increases temporarily around a time that the shaft 114 first begins to decelerate. The increase in the power output level causes the controller 116 to maintain or decrease a fuel supplied to the combustor 112, since the controller 116 detects that the power output level to the grid is above the base power output level. Although the power output level is technically above the required power output level, a decrease in fuel supplied to the combustor 112 results in a decrease in the gas turbine torque, such that when the frequency of the electricity grid 120 stabilizes and the acceleration $\alpha$ of the shaft 114 returns to zero, the gas turbine system 110 generates an output less than the power output level required to satisfy grid code requirements.

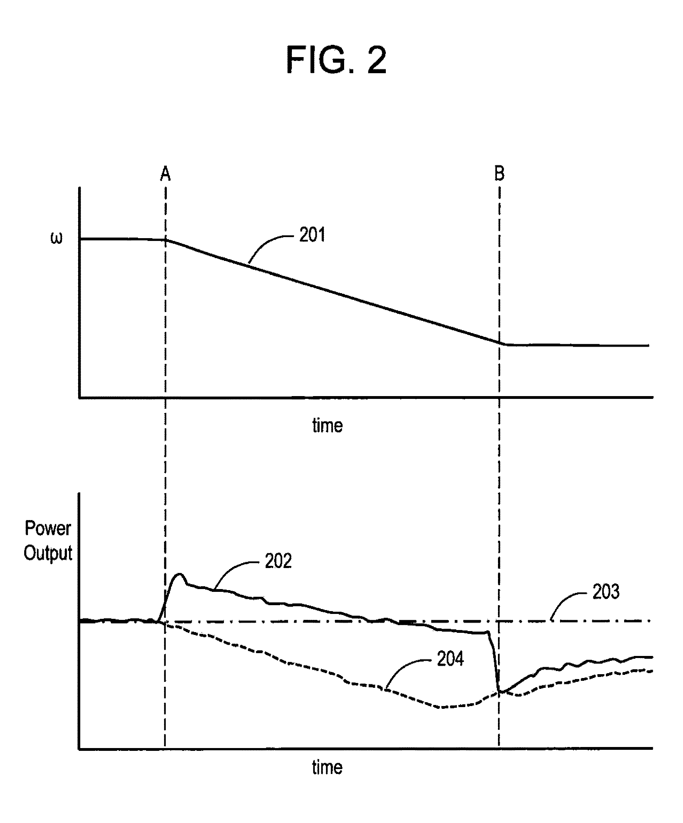

FIG. 2 is a graph illustrating an operation of a gas turbine, such as the gas turbine system 110 of FIG. 1 according to an embodiment of the invention. Line 201 represents a rotation speed $\omega$ of a turbine shaft. Line 202 represents an uncompensated gas turbine power output and line 203 represents a target power output or base load power output level of the gas turbine. Prior to point A, the power output of the gas turbine is approximately the same as the target power output 203. At point A in time, the shaft begins to decelerate and the rotation speed $\omega$ slopes downward as illustrated by line 201. As discussed above, according to the change in power output equation (1), when the shaft decelerates, the gas turbine power output initially increases suddenly, as illustrated by the line 202. A controller of the turbine may interpret the sudden increase in gas turbine output as the turbine providing more power than necessary, and may decrease fuel to a combustor.

Over time, as the rotation rate $\omega$ of the shaft continues to decrease, the gas turbine output power decreases as indicated by the line 202, eventually to a point below the target output power 203. When the rotation speed $\omega$ of the shaft stabilizes at point B, as shown by line 201 leveling out, the gas turbine power output represented by the line 202 decreases suddenly and begins to slowly increase as the controller increases a fuel supplied to a combustor of the gas turbine to increase the torque of the gas turbine shaft. In other words, when the uncompensated power signal is relied upon during the deceleration of the shaft, the controller does not immediately begin to take steps to address the decrease in shaft rotation rate $\omega$ since the uncompensated power signal indicates the output power as being above a target output power 203 for a time after the shaft begins decelerating. Accordingly, by the time B that the shaft speed $\omega$ levels out, the gas turbine is no longer receiving sufficient fuel to generate the torque on the shaft necessary to maintain power output at the target output power 203.

Line 204 represents an adjustment to the sensed power based upon the change in power output equation (1) according to an embodiment of the invention. At point A, when the gas turbine controller detects a deceleration of the shaft, represented by line 201, the controller adjusts the sensed gas turbine power to omit or cancel out an acceleration factor $\alpha$. Accordingly, the adjusted power output value detected by the controller tracks the rotation speed $\omega$ of the shaft from point A to point B, and the controller begins adjusting the fuel supplied to the combustor immediately at point A.

While line 204 is illustrated in FIG. 2 for purposes of describing an adjustment based upon equation (1) along an entire span of deceleration of the turbine shaft between point A and point B, in embodiments of the invention, the controller's rapid response to the deceleration of the turbine shaft at point A would allow the power output of the gas turbine to track closer to the target power output line 203 and not the line 204. In other words, since the controller detects an immediate decrease in an adjusted power output value corresponding to line 204 at point A instead of the increase suddenly represented by line 202, the controller is able to immediately control the gas turbine to compensate for the decrease in the adjusted power calculation. The controller may control fuel supplied to a combustor of the gas turbine to maintain power output, based on the adjusted power output calculation, at or above the target power output 203 between points A and B. When the shaft speed levels out at point B, the power output level may be maintained at the target power output 203.

In one embodiment of the invention, the adjusted power equation cancelling the variable representing shaft acceleration $\alpha$ is utilized only when a decrease in shaft speed $\omega$ is detected. When an increase in shaft speed $\omega$ is detected, or when the shaft acceleration $\alpha$ is positive, the controller may continue to use the unadjusted power which includes the effects of shaft acceleration $\alpha$. In an alternative embodiment, when an increase in shaft speed $\omega$ is detected,

the controller may maintain constant a fuel flow to the gas turbine for the duration of the shaft speed ω increase.

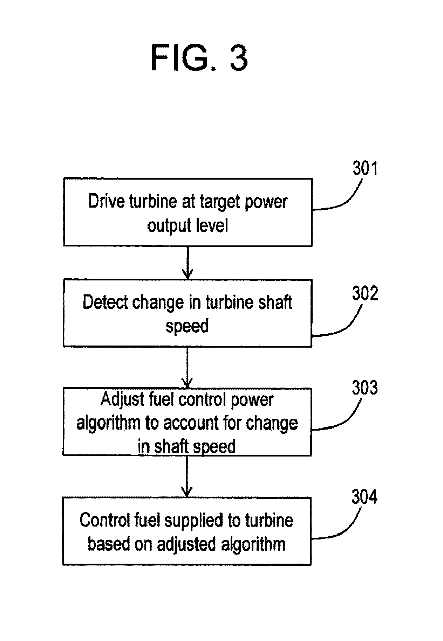

Figure 3 illustrates a flow diagram of a method according to embodiments of the invention. In block 301, a gas turbine is driven at a target power output level. The target power level may correspond to a power level required by an electrical grid operator, such as a government entity, by a customer or by the gas turbine operator. In block 302, a change in turbine shaft speed is detected. In particular, a controller may detect a deceleration in the shaft speed. The shaft speed may be detected by speed sensors connected to the gas turbine, such as optical sensors, accelerometers, or any other type of sensor capable of measuring the rotation speed of a turbine shaft.

In block 303, an algorithm that calculates power for the purpose of controlling fuel flow to a combustor of the gas turbine is adjusted based on detecting the change in the turbine shaft speed. In one embodiment, during normal operation in which the turbine shaft speed is constant, no adjustment is made to the turbine output power. The non-adjusted turbine power output may also be used when an increase in shaft speed is detected. However, when it is determined that the turbine shaft is decelerating, an equation to adjust the gas turbine power output is used to control fuel flow to the gas turbine. In embodiments of the invention, this equation omits or cancels out a variable corresponding to the acceleration of the turbine shaft.

In block 304, the fuel supplied to the gas turbine is controlled based on the adjusted gas turbine power. Accordingly, the gas turbine is controlled in such a way to rapidly react to a change in turbine shaft speed, and no increase suddenly in turbine power is detected when the shaft begins to decelerate.

According to embodiments of the invention, an adjustable power output of a gas turbine is used to control fuel flow to the gas turbine. The power output estimation does not adjust for acceleration of the turbine shaft when the turbine shaft is at a constant speed or accelerating, but the estimated power output is adjusted to omit a variable corresponding to turbine shaft acceleration when the turbine shaft is decelerating. Accordingly, a turbine controller rapidly responds to deceleration of a turbine shaft by increasing a fuel flow to the turbine shaft based on the adjusted equation as the turbine shaft begins to decelerate.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:

1. A power system, comprising:

a gas turbine configured to rotate a shaft to supply power to an electricity grid; and

a controller configured to detect a change in a speed of the shaft and to adjust a formula for controlling a fuel supplied to a combustor of the gas turbine based on detecting a changing shaft speed.

2. The power system of clause 1, wherein the controller is configured to adjust the formula by omitting from the formula a variable corresponding to shaft acceleration based on detecting the changing shaft speed.

3. The power system of any preceding clause, wherein the controller is configured to omit from the formula the variable corresponding to the shaft acceleration based on detecting a decreasing shaft speed.

4. The power system of any preceding clause, wherein the controller is configured to include in the formula the variable corresponding to the shaft acceleration based on detecting an increasing shaft speed.

5. The power system of any preceding clause, wherein the formula for controlling the fuel supplied to the combustor is based on a change in power output equation:

Change in gas turbine power output = - $I\omega\alpha$,

wherein $\omega$ is a speed of the shaft, I is an moment of inertia of the shaft, and $\alpha$ is the variable corresponding to the shaft acceleration.

6. The power system of any preceding clause, wherein the controller is configured to maintain steady a supply of fuel to the gas turbine based on detecting an increasing shaft speed.

7. A method of controlling a gas turbine connected to an electrical grid, comprising:

detecting a change in speed of a shaft of the gas turbine;

adjusting a formula for controlling fuel supplied to a combustor of the gas turbine based on detecting a changing shaft speed; and

controlling the fuel supplied to the combustor based on the adjusting the formula for controlling the fuel.

8. The method of any preceding clause, wherein adjusting the formula includes omitting from the formula a variable corresponding to shaft acceleration based on detecting the changing shaft speed.

9. The method of any preceding clause, wherein adjusting the formula includes omitting from the formula the variable corresponding to the shaft acceleration based on detecting a decreasing shaft speed.

10. The method of any preceding clause, further comprising:

including in the formula the variable corresponding to the shaft acceleration based on detecting an increasing shaft speed.

11. The method of any preceding clause, wherein the formula for controlling the fuel supplied to the combustor is based on a power output equation:

$$\text{Change in gas turbine power output} = -I\omega\alpha,$$

wherein $\omega$ is a speed of the shaft, I is an moment of inertia of the shaft, and $\alpha$ is the variable corresponding to the shaft acceleration.

12. The method of any preceding clause, further comprising:

maintaining steady a supply of fuel to a combustor of the gas turbine based on detecting an increasing shaft speed.

13. A gas turbine controller, comprising:

memory configured to store a formula for controlling a fuel supplied to a combustor of a gas turbine, the formula based on power output from the gas turbine; and

a processor configured to detect a change in a speed of a shaft of the gas turbine and to adjust the formula for controlling the fuel supplied to the combustor of the gas turbine based on detecting a changing shaft speed.

14. The gas turbine controller of any preceding clause, wherein the gas turbine controller is configured to adjust the formula by omitting from the formula a variable corresponding to shaft acceleration based on detecting the changing shaft speed.

15. The gas turbine controller of any preceding clause, wherein the gas turbine controller is configured to omit from the formula the variable corresponding to the shaft acceleration based on detecting a decreasing shaft speed.

16. The gas turbine controller of any preceding clause, wherein the formula for controlling the fuel supplied to the combustor is based on a power output equation:

$$\text{Change in gas turbine power output} = -I\omega\alpha,$$

wherein $\omega$ is a speed of the shaft, I is an moment of inertia of the shaft, and $\alpha$ is the variable corresponding to the shaft acceleration.

17. The gas turbine controller of any preceding clause, wherein the gas turbine controller is configured to maintain steady a supply of fuel to the gas turbine based on detecting an increasing shaft speed.

**Claims**

1.  A power system (100), comprising:

    a gas turbine (110) configured to rotate a shaft (114) to supply power to an electricity grid (120); and
    a controller (116) configured to detect a change in a speed of the shaft (114) and to adjust a formula for controlling a fuel supplied to a combustor (112) of the gas turbine (110) based on detecting a changing shaft speed.

2.  The power system of claim 1, wherein the controller (116) is configured to adjust the formula by omitting from the formula a variable corresponding to shaft acceleration based on detecting the changing shaft speed.

3.  The power system of claim 2, wherein the controller (116) is configured to omit from the formula the variable corresponding to the shaft acceleration based on detecting a decreasing shaft speed.

4.  The power system of claim 3, wherein the controller (116) is configured to include in the formula the variable corresponding to the shaft acceleration based on detecting an increasing shaft speed.

5.  The power system of claim 3 or claim 4, wherein the formula for controlling the fuel supplied to the combustor (112) is based on a change in power output equation:

$$\text{Change in gas turbine power output} = -I\omega\alpha,$$

    wherein $\omega$ is a speed of the shaft, I is a moment of inertia of the shaft, and $\alpha$ is the variable corresponding to the shaft acceleration.

6.  The power system of any preceding claim, wherein the controller (116) is configured to maintain steady a supply of fuel to the gas turbine (110) based on detecting an increasing shaft speed.

7.  A method of controlling a gas turbine (110) connected to an electrical grid (120), comprising:

    detecting (302) a change in speed of a shaft of the gas turbine, and
    adjusting (303) a formula for controlling fuel supplied to a combustor of the gas turbine based on detecting a changing shaft speed.

8.  The method of claim 7, further comprising:

    controlling (304) the fuel supplied to the combustor based on the adjusting the formula for controlling the fuel.

9.  The method of claim 7 or claim 8, wherein adjusting (303) the formula includes omitting from the formula a variable corresponding to shaft acceleration based on detecting the changing shaft speed.

10. The method of claim , wherein adjusting (303) the formula includes omitting from the formula the variable corresponding to the shaft acceleration based on detecting a decreasing shaft speed.

11. The method of claim 10, further comprising:

    including in the formula the variable corresponding to the shaft acceleration based on detecting an increasing shaft speed.

12. The method of claim 10 or claim 11, wherein the formula for controlling the fuel supplied to the combustor is based on a power output equation:

$$\text{Change in gas turbine power output} = -I\omega\alpha,$$

wherein $\omega$ is a speed of the shaft, $I$ is an moment of inertia of the shaft, and $\alpha$ is the variable corresponding to the shaft acceleration.

13. The method of any one of claims 7 to 12, further comprising:

   maintaining steady a supply of fuel to a combustor of the gas turbine based on detecting an increasing shaft speed.

14. A gas turbine controller (116), comprising:

   memory configured to store a formula for controlling a fuel supplied to a combustor (112) of a gas turbine (110), the formula based on power output from the gas turbine (110); and
   a processor configured to perform the method of any one of claims 7 to 13.

# FIG. 1

# FIG. 2

# FIG. 3

Drive turbine at target power output level — 301

Detect change in turbine shaft speed — 302

Adjust fuel control power algorithm to account for change in shaft speed — 303

Control fuel supplied to turbine based on adjusted algorithm — 304

# EP 2 832 976 A1

Europäisches Patentamt
European Patent Office
Office européen des brevets

## EUROPEAN SEARCH REPORT

Application Number

EP 14 17 8891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 609 465 A (BATSON BRETT W [US] ET AL) 11 March 1997 (1997-03-11) * figures 1,2 * * column 2, line 43 - column 3, line 3 * ----- | 1-14 | INV. F02C9/28 F01D15/10 H02P9/04 |
| X | EP 0 903 469 A1 (ASEA BROWN BOVERI [CH] ALSTOM [FR]) 24 March 1999 (1999-03-24) | 1,7 | |
| A | * figure 2 * * column 3, line 56 - column 4, line 10 * ----- | 2-6,8-13 | |
| X | US 2005/131616 A1 (FUJII FUMINORI [JP]) 16 June 2005 (2005-06-16) | 1,7,14 | |
| A | * figure 1 * ----- | 2-6 | |

|  |  |
|---|---|
|  | TECHNICAL FIELDS SEARCHED (IPC) |
|  | F02C F01D H02P |

The present search report has been drawn up for all claims

| Place of search | Date of completion of the search | Examiner |
|---|---|---|
| The Hague | 16 December 2014 | Mihé, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

**ANNEX TO THE EUROPEAN SEARCH REPORT
ON EUROPEAN PATENT APPLICATION NO.**                    EP 14 17 8891

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2014

| Patent document cited in search report | | Publication date | Patent family member(s) | | Publication date |
|---|---|---|---|---|---|
| US 5609465 | A | 11-03-1997 | NONE | | |
| EP 0903469 | A1 | 24-03-1999 | CN | 1216338 A | 12-05-1999 |
| | | | DE | 59708625 D1 | 05-12-2002 |
| | | | EP | 0903469 A1 | 24-03-1999 |
| | | | JP | 4199856 B2 | 24-12-2008 |
| | | | JP | H11153004 A | 08-06-1999 |
| | | | MY | 124581 A | 30-06-2006 |
| | | | TW | 402662 B | 21-08-2000 |
| | | | US | 6216437 B1 | 17-04-2001 |
| US 2005131616 | A1 | 16-06-2005 | CN | 1626783 A | 15-06-2005 |
| | | | DE | 102004058404 A1 | 14-07-2005 |
| | | | JP | 4326317 B2 | 02-09-2009 |
| | | | JP | 2005171873 A | 30-06-2005 |
| | | | US | 2005131616 A1 | 16-06-2005 |

EPO FORM P0459

For more details about this annex : see Official Journal of the European Patent Office, No. 12/82